# EUROPÄISCHE PATENTSCHRIFT

(11) **EP 0 835 746 B1**
(45) Veröffentlichungstag und Bekanntmachung des Hinweises auf die Patenterteilung: **09.07.2003**
(21) Anmeldenummer: 97117370.3
(22) Anmeldetag: 08.10.1997
(51) Int. Cl.: B29D 23/00, B29B 15/10, B29C 63/34, F16L 55/165

(54) **Verfahren zur Herstellung eines schlauch- bzw. rohrartigen Bauteiles**
Method for producing a tubular element
Procédé de fabrication d'un élément tubulaire

(30) Priorität: 11.10.1996 DE 19641974
(43) Veröffentlichungstag der Anmeldung: 15.04.1998
(73) Patentinhaber: Plastobras Holding S.A., 5801 Hesperange (LU)
(72) Erfinder: Weigel, Jürgen, 99817 Eisenach (DE)
(74) Vertreter: Kossobutzki, Walter, Dipl.-Ing.(FH)

(56) Entgegenhaltungen:
- EP-A- 0 412 752
- GB-A- 1 423 819
- US-A- 4 009 063
- US-A- 5 242 517
- US-A- 5 653 555

## Beschreibung

Die Erfindung bezieht sich auf ein Verfahren zur Herstellung eines schlauch- bzw. rohrartigen Bauteils mit mindestens einer Schicht aus einem aushärtbaren, faserverstärkten Kunstharz, bei dem auf einer inneren Tragschicht mindestens eine Zwischenschicht aus einem faserigen Werkstoff angebracht wird, diese Zwischenschicht nach außen durch eine Deckschicht abgeschlossen wird und bei dem anschließend das aushärtende Kunstharz über mindestens einen aus einem flachen Folienschlauch mit Verteilöffnungen gebildeten Kanal in die Zwischenschicht eingeleitet und verteilt wird.

Es ist bekannt, Rohre mit einem schlauchartigen Bauteil mit mindestens einer Schicht aus einem aushärtbaren, faserverstärkten Kunstharz auszukleiden. Bei den auszukleidenden Rohren handelt es sich hauptsächlich um Rohre einer Rohrleitung, welche im Erdreich verlegt ist und insbesondere für das Ableiten von Abwässern benutzt wird. Die Rohre können dabei einen Durchmesser von etwa 100 mm bis 3000 mm aufweisen und aus Beton, Ton oder dergleichen bestehen. Eine derartige Rohrleitung ist über Schächte, die im Abstand von etwa 25 - 100 m angeordnet sind, zugänglich und kontrollierbar. Wenn es bei den Rohren einer solchen Rohrleitung zu Beschädigungen und damit zu Undichtigkeiten kommt, wird jeweils das von Schacht zu Schacht reichende Rohr durch Einbringen einer Auskleidung saniert.

Eine derartige Auskleidung besteht aus einer Schicht aus aushärtbarem Kunstharz, die in der Weise eingebracht wird, dass zunächst ein besonders schlauchartiges Bauteil vorgefertigt wird.

Ein derartiges schlauchartiges Bauteil kann beispielsweise in der Weise hergestellt werden, dass zunächst auf einer schlauchartigen Deckfolie, die durch Stützluft in einer stabilen Lage gehalten wird, ein Glasfasergewebe in mehreren Schichten aufgebracht wird. Anstelle des Glasfasergewebes kann beispielsweise auch ein Polyester- oder Nadelfilz verwendet werden. Diese saugfähige Zwischenschicht wird dann mit einem aushärtbaren Kunstharz getränkt, bevor noch eine äußere Deckfolie aufgebracht wird. Das so vorgefertigte und eine getränkte Zwischenschicht ausweisende schlauchartige Bauteil wird dann in Längsrichtung gefaltet und in das zu sanierende Rohr eingeführt. Nachdem das Bauteil seine endgültige Lage im Rohr eingenommen hat, wird es an einem Ende verschlossen und von seinem anderen Ende aus so weit aufgeblasen, bis es an der Innenwandung des zu sanierenden Rohres anliegt. Sodann wird der Kunststoff mittels UV-Strahlen, heißem Wasser oder Dampf zum Aushärten gebracht.

Der Ablauf dieser bekannten Verfahren macht es erforderlich, dass grundsätzlich nur besondere und in ihrer Herstellung verhältnismäßig teure Kunstharze eingesetzt werden können, die vielfach noch gekühlt werden müssen, damit keine vorzeitige Reaktion bzw. Aushärtung erfolgt. Kalthärtende und somit preiswerte Kunstharze sind grundsätzlich nicht einsetzbar. Darüber hinaus muss das eingesetzte Kunstharz eine verhältnismäßig hohe Zähigkeit aufweisen, damit es bei der Vorfertigung des schlauchartigen Bauteiles und dessen Einbringen in das zu sanierende Rohr durch den Schacht nicht nach unten abfließt und es somit zu unerwünschten Harzansammlungen kommt. Beim Falten des vorgefertigten schlauchartigen Bauteiles, bei seinem Transport zur Baustelle und bei seinem Einbringen in das zu sanierende Rohr besteht die Gefahr, dass das Harz teilweise abgequetscht wird und nicht mehr gleichmäßig über den Umfang verteilt ist. Schließlich ist auch zu berücksichtigen, dass ein derartig vorgefertigtes Bauteil, das in ein zu sanierendes Rohr von mehr als 500 mm Innendurchmesser mit einer Länge von mehr als 25 m eingezogen werden soll, ein hohes Gewicht aufweist, welches dessen Handhabung erheblich erschwert, wenn nicht sogar unmöglich macht. Dies ist beispielsweise dann besonders der Fall, wenn sich das zu sanierende Rohr mehr als 3 m unterhalb der Oberkante des Schachtes befindet. Ferner wird es bei einem derartigen Bauteil für diesen Einsatzzweck als nachteilig angesehen, dass es in vorgefertigtem Zustand nur begrenzt lagerfähig ist. Wird das Bauteil bei seinem Einbringen in das Rohr von einem Scherben aufgeschnitten, ist es fast aussichtslos, dasselbe zu entfernen. Auch bei derartigen durch andere Verfahren hergestellten schlauchartigen Bauteilen ist die Zwischenschicht immer vor dem Einziehen in ein Rohr mit dem Kunstharz durchtränkt.

Der Erfindung liegt deshalb die Aufgabe zugrunde, ein Verfahren zur Herstellung eines schlauch- bzw. rohrartigen Bauteiles mit mindestens einer Schicht aus einem aushärtbaren, faserverstärkten Kunstharz zu schaffen, welches die Möglichkeit bietet, dass verhältnismäßig preiswerte und nicht vorbehandelte Kunstharze, beispielsweise kalthärtende Kunstharze, verwendet werden können, bei dem die Gefahr von Harzansammlungen in der Zwischenschicht vermieden wird und welches auch bei großem Durchmesser und großer Länge leicht handhabbar ist. Insbesondere soll ein hohes, die Handhabung des schlauchartigen Bauteiles beeinträchtigendes Gewicht vermieden werden.

Zur Lösung dieser Aufgabe wird gemäß der Erfindung bei einem Verfahren der eingangs beschriebenen Gattung vorgeschlagen, dass das aushärtende Kunstharz über mindestens einen aus einem flachen Folienschlauch mit Verteilöffnungen gebildeten Kanal in die Zwischenschicht eingeleitet und verteilt wird, wie dies im Patentanspruch 1 angegeben wird.

Das erfindungsgemäße Verfahren unterscheidet sich gegenüber den bekannten Verfahren also grundsätzlich dadurch, dass jetzt das schlauchartige Bauteil, ohne dass dessen Zwischenschicht mit Kunstharz getränkt ist, zunächst erst fertig hergestellt und an seine Einbau- bzw. Verarbeitungsstelle gebracht wird. Dadurch weist das Bauteil ein um etwa 2/3 reduziertes Gewicht auf und ist somit gut handhabbar. Bei der Herstellung des schlauchartigen Bauteiles, dessen Transport zur Baustelle und beispielsweise dessen Einbringen in ein Rohr kann es demzufolge nicht mehr zu Harzansammlungen kommen. Der Umstand, dass der aushärtbare Kunststoff erst später in die Zwischenschicht eingeleitet und verteilt wird, gibt die Möglichkeit, preiswerte, insbesondere kalthärtende Kunstharze zu verwenden, die keinerlei Energieaufwand mehr für ihre Aushärtung oder Kühlung benötigen. Dies bedeutet, dass Energie eingespart wird. Damit kann ein bisher immer erforderlicher Arbeitsschritt eingespart werden. Selbstverständlich ist es bei diesem Verfahren auch möglich, die bisher verwendeten Kunstharze einzusetzen und in der bisher bekannten Weise auszuhärten. Ein derartig hergestelltes Bauteil kann beispielsweise nach seinem Einbringen in ein Rohr auf Dichtigkeit geprüft werden, bevor das Kunstharz eingeleitet wird. Durch die Ausbildung des vorgefertigten, schlauchartigen Bauteiles als geschlossenes System ist die Gefahr ausgeschlossen, daß Kunstharz austritt und in das Kanalrohr bzw. Abwasser gelangt.

Auch auf Rohren kann ein solches Bauteil eingesetzt bzw. hergestellt werden.

Weiterbildungen des Verfahrens gemäß der Erfindung sind in den Ansprüchen 2 bis 13 offenbart.

Die Erfindung wird nachfolgend anhand eines in einer Zeichnung in vereinfachter Weise dargestellten Ausführungsbeispieles näher erläutert. Dabei zeigen
- Fig. 1: ein Schnitt durch ein nach dem erfindungsgemäßen Verfahren hergestelltes schlauchartiges Bauteil und
- Fig. 2: eine Draufsicht auf das Bauteil der Figur 1.

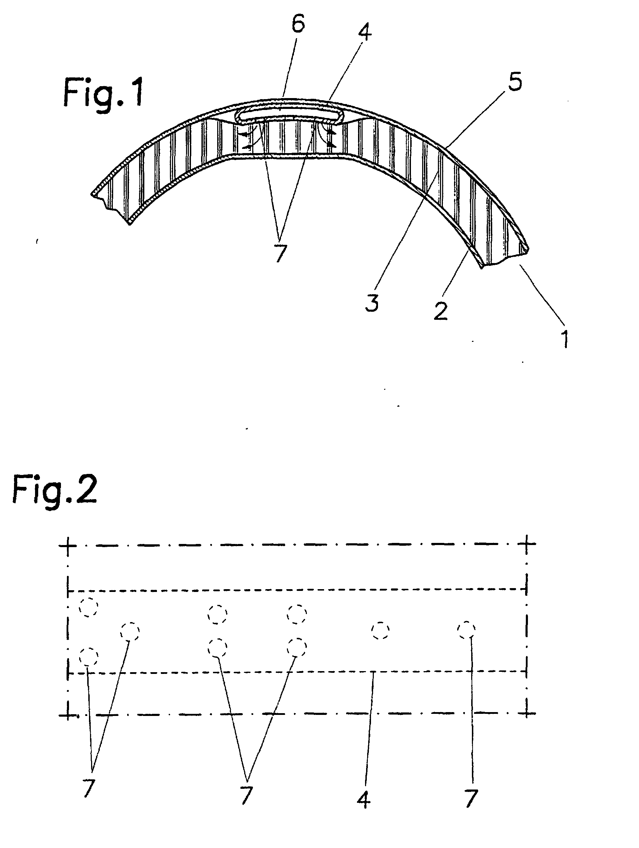

In der Figur 1 der Zeichnung ist ausschnittsweise ein vorgefertìgtes schlauchartiges Bauteil 1 im Schnitt gezeigt, das zur Auskleidung bzw. Sanierung eines beschädigten Kanalrohres verwendet wird. Dabei wird ausdrücklich darauf hingewiesen, dass dieses Bauteil 1 auch zur Auskleidung anderer Rohre einsetzbar ist bzw. auf Rohren hergestellt wird. Das Bauteil 1 besteht zunächst aus einer inneren Tragschicht 2, die ebenfalls schlauchartig ausgebildet ist. Diese innere Tragschicht 2 wird entweder als Schlauch von einer Vorratsrolle abgezogen oder durch einen vorgeschalteten Arbeitsgang mit einer axial oder spiralförmig verlaufenden Schweiß- oder Klebenaht hergestellt.

Für die Bildung des vorgefertigten Bauteiles 1 wird nun die schlauchartige Tragschicht 2 mittels Luft aufgeblasen, so dass eine Art Kern mit einem kreisförmigen Querschnitt entsteht. Auf diesen verhältnismäßig stabilen Kern wird nun mittels eines Wickelkopfes mindestens ein, beispielsweise aus Glasfasern bestehender Faserstrang in mindestens einer Lage aufgewickelt, wobei dieser Wickelvorgang bedarfsweise in mehreren Stufen erfolgen kann. Sobald die Zwischenschicht 3 die erforderliche Dicke erreicht hat, wird beispielsweise auf diese Zwischenschicht 3 ein Folienschlauch 4 aufgelegt, der flach gefaltet ist. Dieser Folienschlauch 4 kann beispielsweise mittels Klebestreifen oder Klebepunkten auf der Zwischenschicht 3 befestigt werden. Der Folienschlauch 4 verläuft im dargestellten Ausführungsbeispiel, wie die Figur 2 erkennen lässt, genau in axialer Richtung des Bauteiles 1. Dabei ist es grundsätzlich auch möglich, den Folienschlauch 4 mäanderförmig oder wendelförmig verlaufend auf der Zwischenschicht 3 anzuordnen. Bedarfsweise ist es möglich, auf der Zwischenschicht 3 mehrere Folienschläuche 4 anzuordnen. In Abhängigkeit von dem Werkstoff und der Dicke der Zwischenschicht 3 ist es ferner möglich, den Folienschlauch 4 entweder getrennt oder zusätzlich in der Zwischenschicht 3 und/oder unterhalb der Zwischenschicht 3, also auf der inneren Deckfolie 2, anzuordnen. Die Zwischenschicht 3 kann auch aus Filz, Polyester- Nadelfilz oder einem besonderen textilen Gewebe bestehen, welches zumindest innen mit einer Folie kaschiert sein kann. Eine solche Zwischenschicht 3 kann in einfacher Weise durch eine Naht zu einem um die Tragschicht 2 geschlossennen Schlauch geformt sein, wobei über die Naht unnd/oder die Überlappungskante ein Klebeband aufgebracht wird. Die Zwischenschicht 3 kann auch aus mehreren Schichten bestehen, die beispielsweise durch ein Diaphragma getrennt, aber miteinander verbunden sind.

Sobald zumindest'ein Folienschlauch 4 seine vorgegebene Lage eingenommen hat, wird auf der Zwischenschicht 3 und damit über dem Folienschlauch 4 eine äußere Deckschicht 5 aufgebracht. Diese äußere Deckschicht 5 kann entweder eine Längsnaht aufweisen oder durch einen Wickelvorgang hergestellt sein. Das so gebildete Bauteil 1 weist nun einen Außendurchmesser auf, der weitgehend mit dem Innendurchmesser des Kanalrohres übereinstimmt, welches beschädigt ist und ausgekleidet werden soll. Die Länge des vorgefertigten Bauteiles 1 ist dabei um ein gewisses Maß größer als der Abstand zwischen zwei Schächten, zwischen denen sich das beschädigte Kanalrohr befindet. Der Folienschlauch 4 ragt zumindest an einem Ende aus dem vorgefertigten Bauteil 1 heraus, so dass an den Folienschlauch 4 eine Rohrleitung oder ein anderer Schlauch angeschlossen werden kann. Das so vorgefertigte Bauteil 1 wird nun beispielsweise unter Faltung in Längsrichtung flach aufgewickelt und zu einer Baustelle transportiert. Mittels einer geeigneten Vorrichtung kann das Bauteil 1 auch direkt an der Baustelle gefertigt werden.

Das vorgefertigte Bauteil 1 wird nun beispielsweise an einem Ende geschlossen und mit diesem Ende in das beschädigte Kanalrohr eingezogen. Sobald das vorgefertigte Bauteil 1 seine Endlage im Kanalrohr erreicht hat, dass heißt, das Bauteil 1 erstreckt sich von einem Schacht bis zum nächsten Schacht, wird das offene Ende des Bauteiles 1 beispielsweise mit einem besonderen Verschluss versehen, über den Luft in das Bauteil 1 einströmen kann. Durch diese Luft wird nun das Bauteil 1 aus seiner gefalteten Lage wieder zu einem beliebigen, meist kreisförmigen oder ovalen Querschnitt aufgeblasen und an der Innenwandung des beschädigten Kanalrohres zum Anliegen gebracht. Jetzt oder bereits vorher wird an den Folienschlauch 4 eine Leitung angeschlossen, über die in denselben ein aushärtbares Kunstharz eingepumpt wird. Durch das eingepumpte Kunstharz wird nun der Folienschlauch 4 zu einem verhältnismäßig flachen Kanal 6 geformt, wie dies die Figur 1 sehr deutlich erkennen lässt. Der Kanal 6 bildet somit einen Strömungsweg für das eingepumpte, aushärtbare Kunstharz.

Im dargestellten Ausführungsbeispiel ist der Folienschlauch 4 an seiner der Zwischenschicht 3 zugewandten Wandung nun mit einer Vielzahl von Verteilöffnungen 7 versehen, über die das in den Kanal 6 eingepumpte Kunstharz ausströmen und somit die Zwischenschicht 3 tränken kann. Die Anzahl und der Querschnitt dieser Verteilöffnungen 7 wird dabei so gewählt, dass das eingepumpte Kunstharz zunächst weitgehend gleichmäßig über die gesamte Länge des Bauteiles 1 in die Zwischenschicht 3 ausströmt. Von der Einpumpseite des Folienschlauches 4 aus betrachtet, kann sich die Anzahl und/oder der Querschnitt der Verteilöffnungen 7 verändern, so dass auch am Ende des schlauchartigen Bauteiles 1 sichergestellt ist, dass dort etwa die gleiche Menge an aushärtbarem Kunstharz pro Längeneinheit und Zeiteinheit austritt, wodurch eine gleichmäßige Durchtränkung der Zwischenschicht mit dem aushärtbaren Kunstharz sichergestellt ist. Wenn das Kunstharz verhältnismäßig dünnflüssig ist, wird die Durchtränkung der Zwischenschicht erleichtert. Um die Durchtränkung der Zwischenschicht mit dem eingepumpten, aushärtbaren Kunststoff zu erleichtern, ist es vorteilhaft, wenn an die Zwischenschicht 3, also an den Raum zwischen der inneren Tragschicht 2 und der äußeren Deckschicht 5, Vakuum angelegt wird. Durch das Anlegen von Vakuum werden darüber hinaus unerwünschte Lufteinschlüsse vermieden. Bedarfsweise kann auch für das Vakuum ein besonderer, sich in axialer Richtung erstreckender Kanal vorgesehen sein, der ebenfalls aus einem Folienschlauch besteht. Hier müssen jedoch Maßnahmen getroffen werden, dass sich dieser Folienschlauch bis zu einem vorgegebenen Unterdruck nicht flach zusammenziehen kann. Die Größe des Vakuums richtet sich nach dem Verhältnis von Kunstharz zu den Fasern der Zwischenschicht 3, welches von etwa 30 : 70 bis 80 : 20 betragen kann.

Das Durchtränken der Zwischenschicht 3 mit dem aushärtbaren Kunstharz dauert nur wenige Minuten, so dass auch ein kalthärtendes Kunstharz verwendet werden kann. Sobald die für die Tränkung der Zwischenschicht 3 erforderliche Kunstharzmenge eingepumpt wurde, wird die Zufuhr des Kunstharzes unterbrochen und es braucht jetzt nur noch die Aushärtung abgewartet zu werden. Sobald das Bauteil 1 bzw. die Zwischenschicht 3 ausreichend angehärtet ist, kann die Stützluft abgelassen werden. Jetzt können die in die Schächte . ragenden Enden des Bauteiles 1 bzw. der dadurch ausgebildeten Auskleidung abgeschnitten und entsprechend den Erfordernissen bearbeitet werden.

Das vorbeschriebene Verfahren der Auskleidung eines Rohres erlaubt es, auch die bisher eingesetzten Kunstharze, sofern Diaphragma erforderlich sein sollte, weiter zu verwenden, und die Aushärtung mittels UV-Strahlen oder durch Wärmezufuhr durchzuführen. Die Verwendung von kalthärtenden Kunstharzen gibt die Möglichkeit auch sogenannte Hausanschlüsse mit einem derartig vorgefertigten Bauteil 1 auszukleiden. Darüber hinaus gibt das erfindungsgemäße Verfahren den Vorteil, dass die Auskleidung bzw. die Zwischenschicht 3 erheblich dicker ausgebildet werden kann, was mit den vorbekannten Verfahren nicht möglich ist. Bei einer aus mindestens zwei Schichten gebildeten Zwischenschicht 3 ist es zweckmäßig, dieselben nacheinander mit dem aushärtenden Kunstharz zu tränken und nacheinander aushärten zu lassen. Zur Trennung der beiden Schichten kann ein Diaphragmagewebe, Papier oder eine sich auflösende Trennfolie verwendet werden. Die Ausbildung der Zwischenschicht 3 aus mindestens zwei Schichten gibt die Möglichkeit, in denselben das Verhältnis von Kunstharz zu den Fasern unterschiedlich, beispielsweise zwischen 80 : 20 und 30 : 70 zu wählen.

Bedarfsweise kann über und/oder unter der Zwischenschicht 3 jeweils mindestens eine weitere Schicht, beispielsweise ein Filament, vorgesehen sein. Falls es für die gleichmäßige Verteilung des Kunstharzes erforderlich sein sollte, kann der Kanal 6 auch aus einem Hauptkanal und Seitenkanälen bestehen.

## Patentansprüche

1. Verfahren zur Herstellung eines schlauch- bzw rohrartigen Bauteiles (1) mit mindestens einer Schicht aus einem aushärtbaren, faserverstärkten Kunstharz, bei dem auf einer inneren Tragschicht (2) mindestens eine Zwischenschicht aus einem faserigen Werkstoff aufgebracht und diese Zwischenschicht (3) nach außen durch eine Deckschicht (5) abgeschlossen wird und bei dem anschließend in die Zwischenschicht (3) das aushärtbare Kunstharz eingeleitet und verteilt wird,
**dadurch gekennzeichnet,**
**dass** das aushärtende Kunstharz über mindestens einen aus einem flachen Folienschlauch (4) mit Verteilöffnungen (7) gebildeten Kanal in die Zwischenschicht eingeleitet und verteilt wird.

2. Verfahren nach Anspruch 1, bei dem während des Einleitens des aushärtbaren Kunstharzes in die Zwischenschicht an dieselbe Vakuum angelegt wird
**dadurch gekennzeichnet,**
**dass** das Vakuum an einen ebenfalls aus einem Folienschlauch mit Absaugöffnungen gebildeten Kanal angelegt wird.

3. Verfahren nach Anspruch 1 oder 2 mit mehreren Kanälen,
**dadurch gekennzeichnet,**
**dass** die Kanäle mäanderförmig verlaufend ausgebildet sind.

4. Verfahren nach Anspruch 1 oder 2,
**dadurch gekennzeichnet,**
**dass** die Kanäle wendelförmig verlaufend angeordnet sind.

5. Verfahren nach mindestens einem der Ansprüche 1 bis 4,
**dadurch gekennzeichnet,**
**dass** die Kanäle aus einem Hauptkanal und Seitenkanälen gebildet sind.

6. Verfahren nach mindestens einem der Ansprüche 1 bis 5,
**dadurch gekennzeichnet,**
**dass** die Kanäle oberhalb, unterhalb und/oder innerhalb der Zwischenschicht verlaufend angeordnet sind.

7. Verfahren nach mindestens einem der Ansprüche 1 bis 6,
**dadurch gekennzeichnet,**
**dass** sich die Verteilöffnungen und/oder die Ansaugöffnungen mit zunehmendem Abstand von der Einlassseite der Kanäle in ihrer Anzahl und/oder in ihrem Querschnitt verändern.

8. Verfahren nach mindestens einem der Ansprüche 1 bis 7,
**dadurch gekennzeichnet,**
**dass** die Tragschicht aus einem stabilen Formkörper gebildet ist.

9. Verfahren nach mindestens einem der Ansprüche 1 bis 7,
**dadurch gekennzeichnet,**
**dass** die Tragschicht aus einem mit Stützluft beaufschlagten Folienschlauch gebildet ist.

10. Verfahren nach mindestens einem der Ansprüche 1 bis 9,
**dadurch gekennzeichnet,**
**dass** als Kunstharz ein kalthärtendes Harz verwendet wird.

11. Verfahren nach mindestens einem der Ansprüche 1 bis 9,
**dadurch gekennzeichnet,**
**dass** die Aushärtung des Kunstharzes mittels UV-Strahlung, Dampf oder heißem Wasser erfolgt.

12. Verfahren nach mindestens einem der Ansprüche 1 bis 10,
**dadurch gekennzeichnet,**
**dass** das vorgefertigte schlauchartige Bauteil zur Auskleidung von Rohren, insbesondere beschädigten Kanalrohren, verwendet wird.

13. Verfahren nach Anspruch 12,
**dadurch gekennzeichnet,**
**dass** das aushärtende Kunstharz erst nach dem Einführen des schlauchartigen Bauteiles in das auszukleidende Rohr in die Zwischenschicht eingeleitet wird.

## Claims

1. Method for producing a tubular element (1) with at least one layer of a curable, fibre-reinforced synthetic resin, in which method at least one intermediate layer of a fibrous material is applied to an inner supporting layer (2) and this intermediate layer (3) is closed off from the outside by a covering layer (5) and in which method the curable synthetic resin is subsequently introduced into the intermediate layer (3) and distributed, **characterized in that** the curable synthetic resin is introduced into the intermediate layer and distributed by means of at least one channel formed by a flat film tube (4) with distribution openings (7).

2. Method according to Claim 1, in which a vacuum is applied to the intermediate layer while the curable synthetic resin is being introduced into it, **characterized in that** the vacuum is applied to a channel likewise formed by a film tube with suction openings.

3. Method according to Claim 1 or 2 with a plurality of channels, **characterized in that** the channels are formed along a meandering path.

4. Method according to Claim 1 or 2, **characterized in that** the channels are arranged along a meandering path.

5. Method according to at least one of Claims 1 to 4, **characterized in that** the channels are formed by a main channel and side channels.

6. Method according to at least one of Claims 1 to 5, **characterized in that** the channels are arranged such that they run above, below and/or inside the intermediate layer.

7. Method according to at least one of Claims 1 to 6, **characterized in that** the distribution openings and/or the suction openings change in their number and/or in their cross section with increasing distance from the inlet side of the channels.

8. Method according to at least one of Claims 1 to 7, **characterized in that** the supporting layer is formed by a stable moulding.

9. Method according to at least one of Claims 1 to 7, **characterized in that** the supporting layer is formed by a film tube to which supporting air is admitted.

10. Method according to at least one of Claims 1 to 9, **characterized in that** a cold-curing resin is used as the synthetic resin.

11. Method according to at least one of Claims 1 to 9, **characterized in that** the curing of the synthetic resin takes place by means of UV radiation, steam or hot water.

12. Method according to at least one of Claims 1 to 10, **characterized in that** the prefabricated tubular element is used for lining pipes, in particular damaged sewer pipes.

13. Method according to Claim 12, **characterized in that** the curing synthetic resin is introduced into the intermediate layer only after the tubular element has been inserted into the pipe to be lined.

## Revendications

1. Procédé de fabrication d'un élément tubulaire souple ou rigide (1) avec au moins une couche en une résine synthétique durcissable, renforcée par des fibres, dans lequel on dépose sur une couche de base intérieure (2) au moins une couche intermédiaire en une matière fibreuse et on bouche cette couche intermédiaire (3) vers l'extérieur avec une couche de recouvrement (5) et dans lequel ensuite on introduit et on répartit la résine synthétique durcissable dans la couche intermédiaire (3), **caractérisé en ce que** l'on introduit et l'on répartit la résine synthétique durcissable dans la couche intermédiaire par au moins un canal formé par une gaine de film souple plate (4) avec des ouvertures de répartition (7).

2. Procédé suivant la revendication 1, dans lequel on applique une dépression à la couche intermédiaire pendant l'introduction de la résine synthétique dans celle-ci, **caractérisé en ce que** l'on applique la dépression à un canal également formé par une gaine de film souple avec des ouvertures d'aspiration.

3. Procédé suivant la revendication 1 ou 2 avec plusieurs canaux, **caractérisé en ce que** les canaux ont une forme sinueuse.

4. Procédé suivant la revendication 1 ou 2, **caractérisé en ce que** les canaux sont disposés sous forme hélicoïdale.

5. Procédé suivant au moins une des revendications 1 à 4, **caractérisé en ce que** les canaux sont formés d'un canal principal et de canaux latéraux.

6. Procédé suivant au moins une des revendications 1 à 5, **caractérisé en ce que** les canaux sont disposés au-dessus, en dessous et/ou à l'intérieur de la couche intermédiaire.

7. Procédé suivant au moins une des revendications 1 à 6, **caractérisé en ce que** les ouvertures de répartition et/ou les ouvertures d'aspiration changent en nombre et/ou en section transversale avec l'augmentation de la distance depuis le côté d'entrée des canaux.

8. Procédé suivant au moins une des revendications 1 à 7, **caractérisé en ce que** la couche de base est formée par un corps moulé stable.

9. Procédé suivant au moins une des revendications 1 à 7, **caractérisé en ce que** la couche de base est formée par une gaine de film alimentée en air de soutien.

10. Procédé suivant au moins une des revendications 1 à 9, **caractérisé en ce que** l'on utilise comme résine synthétique une résine durcissant à froid.

11. Procédé suivant au moins une des revendications 1 à 9, **caractérisé en ce que** l'on effectue le durcissement de la résine synthétique au moyen d'un rayonnement UV, de vapeur ou d'eau chaude.

12. Procédé suivant au moins une des revendications 1 à 10, **caractérisé en ce que** l'on utilise l'élément tubulaire souple préfabriqué pour le revêtement de tubes rigides, en particulier de tubes de canal endommagés.

13. Procédé suivant la revendication 12, **caractérisé en ce que** l'on n'introduit la résine synthétique durcissable dans la couche intermédiaire qu'après l'introduction de l'élément tubulaire souple dans le tube rigide à revêtir.
